# FASCICULE DE BREVET EUROPEEN

(11) **EP 2 809 883 B1**
(45) Date de publication et mention de la délivrance du brevet: **20.07.2022**
(21) Numéro de dépôt: 13706579.3
(22) Date de dépôt: 28.01.2013
(51) Int. Cl.: F01D 5/14, F04D 29/32

(54) **AUBE POUR SOUFFLANTE DE TURBOREACTEUR**
STRAHLTRIEBWERK-GEBLÄSESCHAUFEL
JET ENGINE FAN BLADE

(30) Priorité: 30.01.2012 FR 1250838
(43) Date de publication de la demande: 10.12.2014
(73) Titulaire: Safran Aircraft Engines, 75015 Paris (FR)
(72) Inventeur: POUZADOUX, Frédéric, F-77550 Moissy-Cramayel Cedex (FR); BOIS, Béatrice, Nathalie, F-77550 Moissy-Cramayel Cedex (FR); ROUX, Jean-Michel, F-77550 Moissy-Cramayel Cedex (FR); TILL, Florent, F-77550 Moissy-Cramayel Cedex (FR)
(74) Mandataire: Cabinet Beau de Loménie
(86) Numéro de dépôt international: PCT/FR2013/050168
(87) Numéro de publication internationale: WO 2013/114030

(56) Documents cités:
- EP-A1- 1 921 324
- EP-A1- 2 278 124
- EP-A2- 0 801 230
- EP-A2- 1 953 341
- EP-A2- 1 985 802
- DE-A1- 19 812 624

## Description

La présente invention se rapporte au domaine général des aubes d'une soufflante de turboréacteur. Elle vise plus précisément leur géométrie.

L'élaboration d'une aube de soufflante de turboréacteur doit répondre à différents critères multidisciplinaires. En effet, une aube de soufflante est dessinée de façon à optimiser son rendement ainsi que sa poussée (notamment ses capacités de débit à haut régime) tout en lui garantissant une bonne tenue mécanique, en particulier aux vitesses de rotation élevées pour lesquelles les contraintes mécaniques subies par l'aube sont des plus sévères. La conception d'une aube de soufflante doit également respecter les objectifs de bruits définis en différents points de fonctionnement décrits dans les normes actuelles.

De nombreuses géométries d'aubes de soufflante ont été proposées. Elles se caractérisent généralement par une loi d'empilage du bord d'attaque de leurs profils et l'évolution de l'angle de flèche de celui-ci dans le but d'améliorer les performances aérodynamiques de l'aube et de diminuer le bruit engendré par la soufflante. On pourra citer par exemple la publication EP 1,452,741 qui décrit une géométrie particulière d'aube en flèche pour soufflante ou compresseur de turboréacteur.

Les documents EP0801230 et EP1953341 divulguent des aubes de soufflante de turbomachine.

### Objet et résumé de l'invention

La présente invention a pour objet de proposer une géométrie d'aube de soufflante lui conférant des gains aérodynamiques notables par rapport à l'état de l'art, principalement en débit spécifique, mécaniques et acoustiques.

Conformément à l'invention, ce but est atteint grâce à une aube pour soufflante de turboréacteur, comprenant un pied, un sommet, un bord d'attaque, et un bord de fuite, dans laquelle le bord d'attaque présente un angle de flèche supérieur ou égal à +28° dans une partie de l'aube située à une hauteur radiale comprise entre 60% et 90% de la hauteur radiale totale de l'aube mesurée depuis son pied vers son sommet, et l'écart d'angle de flèche du bord d'attaque est inférieur à 10° entre une hauteur radiale de minimum de flèche correspondant à un minimum de flèche situé dans la partie de l'aube comprise entre 15% et 45%

de la hauteur radiale de l'aube et une hauteur radiale mesurée à 10% au-dessus de cette hauteur radiale de minimum de flèche. L'angle; de flèche du bord d'attaque est d'abord positif dans une partie de l'aube située à une hauteur radiale comprise entre 0% et 15% de la hauteur radiale de l'aube, devient négatif jusqu'à une hauteur radiale de 45% puis redevient positif depuis ce point.

Une valeur d'au moins +28° pour la flèche arrière du bord d'attaque permet à l'aube d'atteindre un débit spécifique maximal supérieur à 210 kg/s/m² avec une opérabilité suffisante pour le moteur, c'est-à-dire en limitant l'augmentation de prise d'incidence des profils sans recours à des dispositifs de variabilité (calage, tuyère ...). Quant à sa localisation au-dessus de 60% de la hauteur radiale totale de l'aube, elle est imposée par l'intégration des contraintes mécaniques et acoustiques auxquelles est soumise l'aube. En effet, l'équilibre mécanique recherché pour favoriser la réduction des contraintes tant en fonctionnement nominal (durée de vie de la zone de l'aube sous la veine moyeu, longévité des interfaces de contact entre aube et disque) qu'en fonctionnement extrême (résistance à l'ingestion d'oiseaux lourds, aux sollicitations vibratoires fortes) additionnés aux contraintes d'opérabilité qui empêche une réduction trop importante de la corde en sommet, limitent l'amplitude possible d'oscillations du centre de gravité sur la hauteur de l'aube et encore plus sur les 50% inférieurs où se localisent les contraintes mécaniques de façon privilégiée.

La localisation de cette flèche arrière du bord d'attaque à une hauteur radiale inférieure à 90% de la hauteur radiale totale de l'aube permet d'éviter une flèche arrière trop importante au niveau des sections de tête (c'est-à-dire des sections proches du carter entourant la soufflante) par rapport aux sections inférieures de sorte à assurer une stabilité aéromécanique de l'aube.

Par ailleurs, l'écart d'angle de flèche du bord d'attaque limité à 10° entre la hauteur radiale de minimum de flèche situé dans la partie de l'aube comprise entre 15% et 45% de la hauteur radiale de l'aube et une hauteur radiale mesurée à 10% au-dessus de la hauteur radiale de minimum de flèche permet d'améliorer la signature acoustique de l'aube en réduisant de manière significative la propagation de la turbulence dans le sillage de celle-ci pour des points de fonctionnement à régime partiels. Ainsi, seules les performances (débit, rendement et acoustique) de l'écoulement du flux secondaire sont prises en compte (le flux secondaire est typiquement compris entre 20% et 100% de la hauteur radiale de l'aube).

Il en résulte une aube dont les performances aérodynamiques sont améliorées tout en restant robuste tant d'un point de vue mécanique qu'acoustique.

Le bord d'attaque peut présenter un angle de flèche négatif (c'est-à-dire une flèche avant) dans une partie inférieure de l'aube comprise entre 15% et 45%.

Dans ce cas, l'écart d'angle de flèche du bord d'attaque est de préférence inférieur à 10° entre une hauteur radiale de passage en flèche arrière correspondant à un point du bord d'attaque de passage en flèche arrière situé directement au-dessus du minimum de flèche avant et une hauteur radiale mesurée à 10% au-dessus de la hauteur radiale de passage en flèche arrière.

Selon une disposition avantageuse, l'écart entre l'abscisse longitudinale maximale du centre de gravité des sections d'aube situées au-dessus d'un point d'abscisse longitudinale minimum et l'abscisse longitudinale du centre de gravité de la section d'aube correspondant au point d'abscisse longitudinale minimum est inférieur ou égal à 20% de la corde axiale de l'aube mesurée au niveau de son pied. Une telle disposition a pour avantage de limiter le moment de l'aube et de l'équilibrer de sorte notamment à limiter les moments de flexion de la pale sur le pied de l'aube.

L'invention a également pour objet une soufflante de turboréacteur et un turboréacteur comportant une pluralité d'aubes telles que définies précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une soufflante de turboréacteur munie d'aubes selon l'invention ;
- la figure 2 est une illustration schématique de la définition de l'angle de flèche ;
- la figure 3 illustre le profil de l'angle de flèche du bord d'attaque d'une aube conforme à l'invention ; et
- la figure 4 représente la projection dans un plan méridien de la ligne des centres de gravité des sections d'une aube conforme à l'invention.

### Description détaillée de l'invention

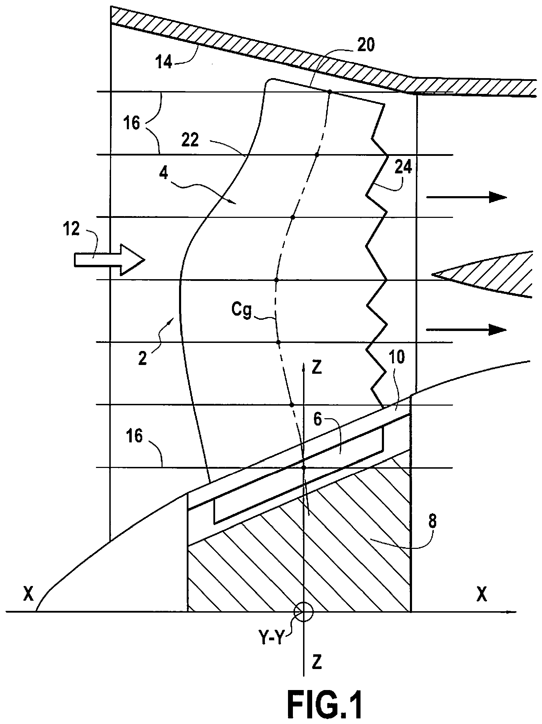

L'invention s'applique à toute aube de soufflante de turboréacteur telle que celle illustrée sur la figure 1. Sur cette figure est représentée de façon partielle une soufflante 2 de turboréacteur comprenant une pluralité d'aubes 4 selon l'invention qui sont régulièrement espacées les unes des autres autour de l'axe longitudinal X-X du turboréacteur, cet axe X-X étant orienté dans le sens du flux d'air traversant la soufflante.

Chaque aube 4 est fixée par un pied 6 sur un disque (ou moyeu) 8 entraîné en rotation autour de l'axe longitudinal X-X du turboréacteur dans le sens de la flèche F. Chaque aube peut comprendre également une plateforme 10 qui forme en partie la paroi interne délimitant à l'intérieur la veine d'écoulement du flux d'air froid 12 traversant la soufflante. Une paroi 14 d'un carter entourant la soufflante forme la paroi externe qui délimite à l'extérieur cette même veine d'écoulement.

Pour la suite de la description, pour chaque aube 4, on définit un axe radial Z-Z comme étant perpendiculaire à l'axe longitudinal X-X et passant par le centre de gravité de la coupe résultant de l'intersection de l'aube avec la paroi interne de la veine d'écoulement du flux d'air froid. Un axe tangentiel Y-Y (non représenté sur les figures) forme un trièdre orthonormé direct avec les axes X-X et Z-Z.

Comme représenté sur la figure 1, chaque aube 4 comporte une pluralité de sections d'aube 16 définies par l'intersection de l'aube avec des plans perpendiculaires à l'axe radial Z-Z et dont les centres de gravité s'empilent suivant une ligne des centres de gravité C_{g}.

Chaque aube 4 est en outre délimitée radialement entre un pied 6 et un sommet 20, et longitudinalement entre un bord d'attaque 22 et un bord de fuite 24. L'aube est par ailleurs vrillée à partir de son pied 6 jusqu'à son sommet 20 afin de comprimer le flux d'air froid 12 traversant la soufflante lors de son fonctionnement.

Pour la suite de la description, on définira la hauteur radiale minimale de l'aube égale 0% comme correspondant au point d'intersection du bord d'attaque de l'aube avec la paroi interne délimitant à l'intérieur la veine d'écoulement du flux d'air froid, et la hauteur radiale maximale de l'aube égale à 100% comme correspond au point de la ligne du bord d'attaque le plus élevé radialement.

Selon l'invention, le bord d'attaque de l'aube présente un angle de flèche supérieur ou égal à +28° dans une partie de l'aube située à une hauteur radiale comprise entre 60% et 90% de la hauteur radiale totale de l'aube mesurée depuis son pied vers son sommet.

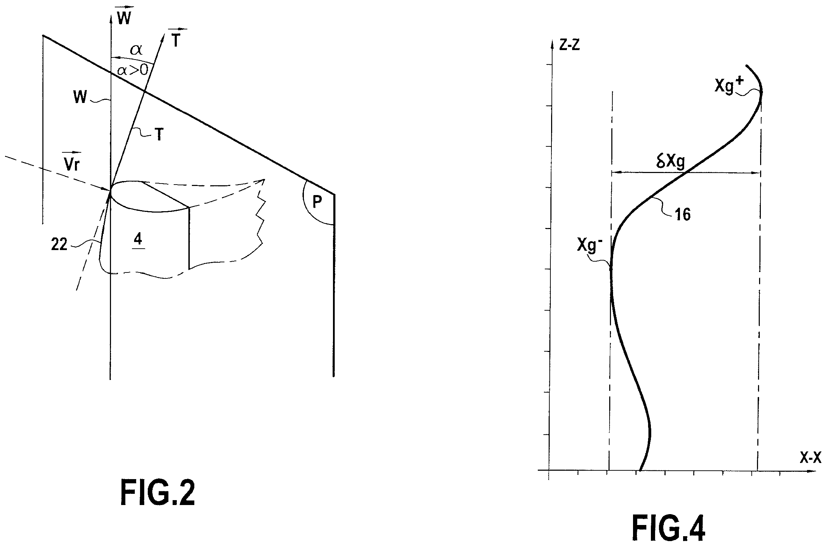

Comme représenté sur la figure 2, par angle de flèche (dénommé « sweep angle » en anglais), on entend l'angle α formé, à un point du bord d'attaque 22 de l'aube 4, entre la tangente T au bord d'attaque et la ligne W perpendiculaire au vecteur de vitesse relative V̅ᵣ, cette ligne W étant comprise dans le plan P qui contient à la fois la tangente T et le vecteur de vitesse relative V̅ᵣ. Cet angle est mesuré dans le plan P. Lorsque l'angle α formé entre le vecteur T̅ (tangente orientée vers les rayons croissants) et le vecteur W̅ (orienté vers les rayons croissants) est positif (cas représenté sur la figure 2), on dit que le bord d'attaque présente une flèche arrière. A l'inverse, quand l'angle α est négatif, on dit que le bord d'attaque présente une flèche avant.

Cette définition est conforme et identique à celle donnée plus précisément dans la publication de Leroy H. Smith et Hsuan Yeh intitulée « Sweep and Dihedral Effects in Axial-Flow Turbomachinery » (publiée au Journal of Basic Engineering de septembre 1963 - p.401). Toutes les valeurs indiquées dans la présente demande sont calculées en respectant les formules détaillées dans cette publication.

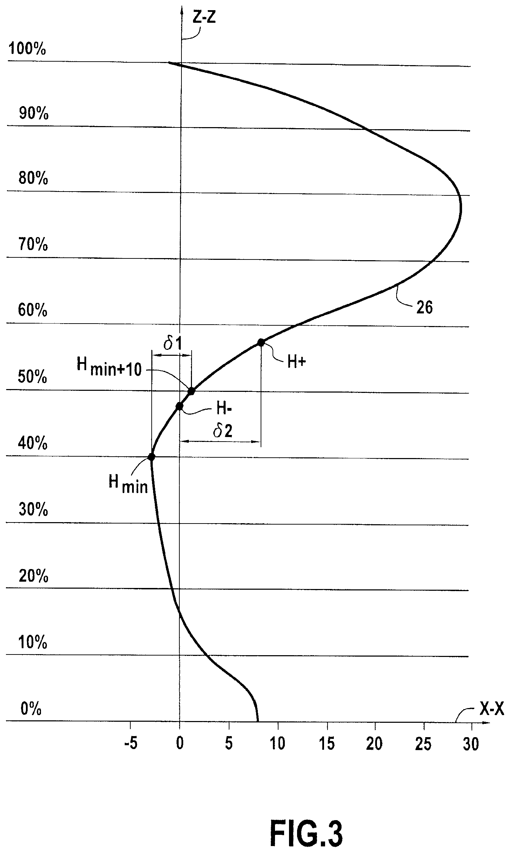

La ligne 26 illustrée sur la figure 3 représente un exemple de distribution de l'angle de flèche du bord d'attaque d'une aube conforme à l'invention en fonction de la hauteur radiale de l'aube.

Sur cet exemple de réalisation, le bord d'attaque de l'aube présente ainsi une flèche arrière (c'est-à-dire un angle de flèche positif) qui est proche de +30° au niveau d'une hauteur radiale comprise entre 70% et 80%.

Toujours selon l'invention, l'écart δ1 d'angle de flèche du bord d'attaque est inférieur à 10° (en valeur absolue) entre une hauteur radiale de minimum de flèche Hₘᵢₙ correspondant à un minimum de flèche situé dans la partie de l'aube comprise entre 20% et 90% de la hauteur radiale de l'aube et une hauteur radiale Hₘᵢₙ₊₁₀ mesurée à 10% au-dessus de cette hauteur radiale de minimum de flèche.

Par « hauteur radiale de minimum de flèche Hₘᵢₙ », on entend ici la hauteur radiale du bord d'attaque de l'aube pour laquelle la valeur d'angle de flèche est la plus faible. Sur l'exemple de réalisation de la figure 2, cette hauteur radiale de minimum de flèche Hₘᵢₙ est située à environ 40% de la hauteur radiale totale de l'aube (l'angle de flèche de -3° γ est minimal sur toute la partie de l'aube comprise entre 20% et 90%).

Toujours sur l'exemple de réalisation de la figure 3, l'écart δ1 d'angle de flèche est, en valeur absolue, de 5° environ (valeur d'angle de flèche pour Hₘᵢₙ : -3°; valeur d'angle de flèche pour Hₘᵢₙ₊₁₀ : +2°).

Le bord d'attaque de l'aube présente une flèche avant (c'est-à-dire un angle de flèche négatif) dans une partie inférieure de l'aube comprise entre les hauteurs radiales comprises entre 15% et 45%. De façon plus précise, l'angle de flèche est d'abord positif entre la hauteur radiale minimale de l'aube (0%) et une hauteur radiale d'environ 15%, devient négatif jusqu'à une hauteur radiale de 45% et redevient positif depuis ce point.

Dans ce cas, l'écart δ2 d'angle de flèche du bord d'attaque entre une hauteur radiale de passage en flèche arrière H- correspondant à un point du bord d'attaque de passage en flèche arrière situé directement au-dessus du minimum de flèche avant Hₘᵢₙ et une hauteur radiale H+ mesurée à 10% au-dessus de la hauteur radiale de passage en flèche arrière est inférieur à 10° (en valeur absolue).

Par « hauteur radiale de passage en flèche arrière H- », on entend ici la hauteur radiale du bord d'attaque de l'aube pour laquelle l'angle de flèche passe d'une valeur positive à une valeur négative. Sur l'exemple de réalisation de la figure 2, cette hauteur radiale de passage en flèche arrière H- est située à environ 45% de la hauteur radiale totale de l'aube.

Toujours sur l'exemple de réalisation de la figure 3, l'écart δ2 d'angle de flèche est, en valeur absolue, de 7° environ (valeur d'angle de flèche pour H- : 0° ; valeur d'angle de flèche pour la hauteur radiale H+ mesurée à 10% au-dessus de H- : +7°).

La figure 4 représente la projection dans un plan méridien de la ligne des centres de gravité des sections d'une aube conforme à l'invention. Cette ligne relie l'abscisse longitudinale du centre de gravité de chaque section de l'aube.

Selon une disposition avantageuse de l'invention représentée sur cette figure 4, l'écart δX_{g}, le long de l'axe moteur X-X orienté dans le sens du flux d'air, entre l'abscisse longitudinale maximale du centre de gravité X_{g}⁺ des sections d'aube situées au-dessus d'un point d'abscisse longitudinale minimum et l'abscisse longitudinale du centre de gravité X_{g}⁻de la section d'aube correspondant au point d'abscisse longitudinale minimum est inférieur ou égal (en valeur absolue) à 20% de la corde axiale de l'aube mesurée au niveau de sa section de pied qui est définie par l'intersection entre l'aube et la paroi interne de la veine.

Par corde de l'aube, on entend la droite reliant les points du bord d'attaque aux points du bord de fuite. La projection axiale de cette corde suivant l'axe moteur X-X est la corde axiale.

La valeur de la corde axiale de l'aube mesurée au niveau de son pied dépend de la taille du moteur. Elle peut par exemple être de l'ordre de 300mm. Dans ce cas, l'écart pourra être par exemple d'environ 45mm, ce qui est bien inférieur à 20% de la corde axiale de l'aube mesurée au niveau de son pied.

## Revendications

1. Aube (4) pour soufflante de turboréacteur, comprenant un pied (6), un sommet (20), un bord d'attaque (22), et un bord de fuite (24), **caractérisée en ce que** :
le bord d'attaque présente un angle de flèche supérieur ou égal à +28° dans une partie de l'aube située à une hauteur radiale comprise entre 60% et 90% de la hauteur radiale totale de l'aube mesurée depuis son pied vers son sommet ;
l'écart (δ1) d'angle de flèche du bord d'attaque est inférieur à 10° entre une hauteur radiale de minimum de flèche (Hₘᵢₙ) correspondant à un minimum de flèche situé dans la partie de l'aube comprise entre 15% et 45% de la hauteur radiale de l'aube et une hauteur radiale | (Hₘᵢₙ₊₁₀) mesurée à 10% au-dessus de cette hauteur radiale de minimum de flèche ;
l'angle de flèche du bord d'attaque est d'abord positif dans une partie de l'aube située à une hauteur radiale comprise entre 0% et 15% de la hauteur radiale de l'aube, devient négatif jusqu'à une hauteur radiale de 45% puis redevient positif depuis ce point.

2. Aube selon la revendication 1, **caractérisée en ce que** le bord d'attaque présente un angle de flèche négatif dans une partie inférieure de l'aube comprise entre 15% et 45% l'écart (δ2) d'angle de flèche du bord d'attaque étant inférieur à 10° entre une hauteur radiale de passage en flèche arrière (H-) correspondant à un point du bord d'attaque de passage en flèche arrière situé directement au-dessus du minimum de flèche avant et une hauteur radiale (H+) mesurée à 10% au-dessus de la hauteur radiale de passage en flèche arrière.

3. Aube selon l'une des revendications 1 et 2, **caractérisée en ce que** l'écart entre l'abscisse longitudinale maximale du centre de gravité des sections d'aube situées au-dessus d'un point d'abscisse longitudinale minimum et l'abscisse longitudinale du centre de gravité de la section d'aube correspondant au point d'abscisse longitudinale minimum est inférieur ou égal à 20% de la corde axiale de l'aube mesurée au niveau de son pied.

4. Soufflante (2) de turboréacteur **caractérisée en ce qu'**elle comporte une pluralité d'aubes (4) selon l'une quelconque des revendications 1 à 3.

5. Turboréacteur **caractérisé en ce qu'**il comporte une pluralité d'aubes selon l'une quelconque des revendications 1 à 3.

## Patentansprüche

1. Schaufel (4) für ein Gebläse eines Strahltriebwerks, umfassend einen Fuß (6), eine Spitze (20), eine Vorderkante (22) und eine Hinterkante (24), **dadurch gekennzeichnet, dass**
die Vorderkante einen Pfeilungswinkel von über oder gleich +28° in einem Teil der Schaufel aufweist, der sich in einer radialen Höhe befindet, die zwischen 60% und 90% der radialen Höhe insgesamt der Schaufel liegt, gemessen von ihrem Fuß zu ihrer Spitze;
die Pfeilungswinkelabweichung (δ1) der Vorderkante kleiner als 10° zwischen einer radialen Mindest-Pfeilungshöhe (Hₘᵢₙ) ist, die einer Mindestpfeilung entspricht, die sich in dem Teil der Schaufel befindet, die zwischen 15% und 45% der radialen Höhe der Schaufel und einer radialen Höhe (Hₘᵢₙ₊₁₀) liegt, gemessen bei 10 % oberhalb dieser radialen Mindestpfeilungshöhe;
der Pfeilungswinkel der Vorderkante zunächst in einem Teil der Schaufel, der sich in einer radialen Höhe befindet, die zwischen 0% und 15% der radialen Höhe der Schaufel liegt, positiv ist, bis zu einer radialen Höhe von 45% negativ wird und dann ab diesem Punkt wieder positiv wird.

2. Schaufel nach Anspruch 1, **dadurch gekennzeichnet, dass** die Vorderkante einen negativen Pfeilungswinkel in einem unteren Teil der Schaufel aufweist, der zwischen 15% und 45% liegt, wobei die Pfeilungswinkelabweichung (δ2) der Vorderkante kleiner als 10° zwischen einer radialen Höhe des Übergangs in Rückpfeilung (H-) ist, die einem Punkt der Vorderkante des Übergangs in Rückpfeilung entspricht, der sich direkt oberhalb der Mindestpfeilung vorn und einer radialen Höhe (H+) befindet, gemessen bei 10% oberhalb der radialen Höhe des Übergangs in Rückpfeilung.

3. Schaufel nach einem der Ansprüche 1 und 2, **dadurch gekennzeichnet, dass** die Abweichung zwischen der maximalen Längsabszisse des Schwerkraftzentrums der Schaufelabschnitte, die sich oberhalb eines minimalen Längsabszissenpunkts befinden, und der Längsabszisse des Schwerkraftzentrums des Schaufelabschnitts, der dem minimalen Längsabszissenpunkt entspricht, kleiner als der oder gleich 20% der axialen Sehne der Schaufel ist, gemessen im Bereich ihres Fußes.

4. Gebläse (2) eines Strahltriebwerks, **dadurch gekennzeichnet, dass** es eine Vielzahl von Schaufeln (4) nach einem der Ansprüche 1 bis 3 aufweist.

5. Strahltriebwerk, **dadurch gekennzeichnet, dass** es eine Vielzahl von Schaufeln nach einem der Ansprüche 1 bis 3 aufweist.

## Claims

1. A turbojet fan blade (4) having a root (6), a tip (20), a leading edge (22), and a trailing edge (24), the blade being **characterized in that**:
• the leading edge presents a steep angle greater than or equal to +28° in a portion of the blade that is situated at a radial height lying in the range 60% to 90% of the total radial height of the blade measured from its root towards its tip;
• the leading-edge sweep angle presents a difference (δ1) of less than 10° between a minimum sweep angle measured at a radial height (Hₘᵢₙ) of minimum sweep angle situated in the portion of the blade lying in the range 15% to 45% of the radial height of the blade, and a sweep angle measured at a radial height (Hₘᵢₙ₊₁₀) that is 10% greater than said radial height of minimum sweep angle;
the leading edge sweep angle is initially positive in a portion of the blade that is situated at a radial height lying in the range of 0% to 15% of the total radial height of the blade, it becomes negative up to a radial height of 45%, and then becomes positive again from that point.

2. A blade according to claim 1, **characterized in that** the leading edge presents a negative sweep angle in a low portion of the blade situated in the range 0% to 50%, the leading-edge sweep angle difference (δ2) being less than 10° between a sweep-back changeover radial height (H-) that corresponds to a point of the leading edge where the sweep changes to sweep-back and that is situated directly above the height of minimum sweep angle, and a sweep angle measured at a radial height (H+) that is 10% greater than the sweep-back changeover radial height.

3. A blade according to claim 1 or claim 2, **characterized in that** the difference between the maximum longitudinal abscissa value of the center of gravity of blade sections situated above a minimum longitudinal abscissa point and the longitudinal abscissa value of the center of gravity of the blade section corresponding to the minimum longitudinal abscissa point is less than or equal to 20% of the axial chord of the blade measured at its root.

4. A turbojet fan (2), **characterized in that** it includes a plurality of blades (4) according to any one of claims 1 to 3.

5. A turbojet, **characterized in that** it includes a plurality of blades according to any one of claims 1 to 3.
